# EUROPEAN PATENT APPLICATION

(11) **EP 3 323 689 A1**
(43) Date of publication of application: **23.05.2018**
(21) Application number: 16824189.1
(22) Date of filing: 14.06.2016
(51) Int. Cl.: B60W 40/02, G08G 1/16

(54) **PERIPHERAL ENVIRONMENT RECOGNITION DEVICE AND COMPUTER PROGRAM PRODUCT**

(30) Priority: 13.07.2015 JP 2015139317
(71) Applicant: Hitachi Automotive Systems, Ltd., Hitachinaka-shi, Ibaraki 312-8503 (JP)
(72) Inventor: HORITA, Yuki, Tokyo 100-8280 (JP); HAYASE, Shigenori, Hitachinaka-shi Ibaraki 312-8503 (JP); KUDO, Makoto, Hitachinaka-shi Ibaraki 312-8503 (JP)
(74) Representative: MERH-IP Matias Erny Reichl Hoffmann Patentanwälte PartG mbB
(86) International application number: PCT/JP2016/067630
(87) International publication number: WO 2017/010209

(57) **Abstract**

Provided is a surrounding environment recognition device that is mounted in a vehicle, including: a traveling path information acquisition unit that acquires traveling path information indicating a traveling path for the vehicle; a surrounding environment element information acquisition unit that acquires surrounding environment element information that includes spatial positional-relationship information indicating a spatial positional relationship to the vehicle, which relates to an environment element in the vicinity of the vehicle; a relationship-of-environment-element-to-traveling calculation unit that calculates a relationship of the environment element to traveling of the vehicle, based on the traveling path information and the spatial positional-relationship information; a surrounding environment information provision unit that provides information relating to the environment element, based on the relationship to the traveling of the vehicle, which is calculated by the relationship-of-environment-element-to-traveling calculation unit.

## Description

### Technical Field

The present invention relates to a surrounding environment recognition device and a computer program product.

### Background Art

Systems have been known in which a situation in the vicinity of a vehicle is recognized using data that is acquired by a vehicle-mounted external sensor such as a radar or a camera or through an inter-vehicle communication, or road map data, and thus vehicle's traveling is automatically controlled. It is assumed that in the systems, due to an increase in complication of the details of automatic control such as automatic drive, progress has been made in an increase in the number of vehicle-mounted external sensors that are mounted and an advance in high-definition road map data and in association with a wide use of a vehicle that supports the inter-vehicle communication, an amount of data for recognition information relating to the vicinity of the vehicle increases in future. For this reason, there is a problem in that arithmetic operation processing load pertaining to the automatic control or an amount of use of memory in which recognition information necessary for the arithmetic operation processing increases and an operation environment for the automatic control is made to be complex.

In contrast, PTL 1 discloses a technology in which in processing relating to information on a different vehicle, which is received through the inter-vehicle communication, the degree of importance of monitoring of the different vehicle is set according to a relative distance or a relative forward-traveling direction and light-load processing is performed on information that has the low degree of importance.

### Citation List

### Patent Literature

PTL 1: JP-A-2012-27553

### Summary of Invention

### Technical Problem

However, in PTL 1, a problem is present in that because it is determined that information on the different vehicle, a relative distance to which is short and which is traveling in the same direction is important, the degree of importance is erroneously set at a junction or at the time of the branching or the joining. For example, in a case where the vehicle turns right at the junction, information on a different vehicle that enters a junction from the opposite lane, a pedestrian or a bicycle on a pedestrian crossing for a right-turning destination, a different vehicle on a road for a right-turning destination, or the like is important, but because these different vehicles do not travel in the same direction as a user's vehicle, in a method in PTL 1, there is a likelihood that setting to the low degree of importance will be performed and thus, important information will not be provided. Furthermore, for example, in a case where the vehicle turns right at the junction, there is a likelihood that a high priority will be assigned when a relative distance is short, regardless of the fact that a different vehicle that travels toward the left-turning direction or the forward-traveling direction has no relationship to the user's vehicle, and thus unnecessary information will not be excluded.

Therefore, an object of the present invention is to provide a surrounding environment recognition device that is capable of reducing arithmetic operation processing load or an amount of use of memory pertaining to control involved by determining with high precision whether or not recognition information is necessary and thus by not providing unnecessary information.

### Solution to Problem

The present application discloses a plurality of means for solving the problems described above. If an example of the plurality of means is described, the problems described above can be solved by providing a surrounding environment recognition device including: a traveling path information acquisition unit that acquires traveling path information indicating a traveling path for the vehicle in which the traveling path information acquisition unit itself is mounted; a surrounding environment element information acquisition unit that acquires surrounding environment element information that includes spatial positional-relationship information indicating a spatial positional relationship to the vehicle, which relates to an environment element in the vicinity of the vehicle; a relationship-of-environment-element-to-traveling calculation unit that calculates a relationship of the environment element to traveling of the vehicle, based on the spatial positional-relationship information to the traveling path information; a surrounding environment information provision unit that provides information relating to the environment element, based on the relationship to the traveling of the vehicle, which is calculated by the relationship-of-environment-element-to-traveling calculation unit.

### Advantageous Effects of Invention

According to the present invention, because it is determined with high precision whether or not recognition information is necessary and thus unnecessary information is made not to be provided, arithmetic operation processing load or an amount of use of memory can be reduced on the control side.

### Brief Description of Drawings

[Fig. 1] Fig. 1 is an example of a functional block diagram of a surrounding environment recognition system 1.
[Fig. 2] Fig. 2 is an example of surrounding environment element information.
[Fig. 3] Fig. 3 is an example of a data structure relating to obstacle information in a surrounding environment element information data group 121.
[Fig. 4] Fig. 4 is an example of a data structure relating to path information in the surrounding environment element information data group 121.
[Fig. 5] Fig. 5 is an example of a data structure relating to a relationship-of-environment-element-to-traveling data group 124.
[Fig. 6] Fig. 6 is an example of a flowchart of surrounding environment recognition processing 500.
[Fig. 7] Fig. 7 is an example of a flowchart of traveling-associated area determination processing 600.
[Fig. 8] Fig. 8 is an example of a scene for describing a traveling-associated area.
[Fig. 9] Fig. 9 is an example of a recommended-for-traveling lane.
[Fig. 10] Fig. 10 is an example of a traveling-associated area.
[Fig. 11] Fig. 11 is an example of a flowchart of relationship-of-environment-element-to-traveling calculation processing 700.
[Fig. 12] Fig. 12 is an example of a flowchart of surrounding environment information provision processing 800.
[Fig. 13] Fig. 13 is an example of a format of a surrounding environment information message.
[Fig. 14] Fig. 14 is an example of a scene for describing following-road information that is included in surrounding environment information.
[Fig. 15] Fig. 15 is a diagram illustrating a situation where a program is provided in an on-board device.

### Description of Embodiments

Embodiments of the present invention will be described below with reference to the drawings.

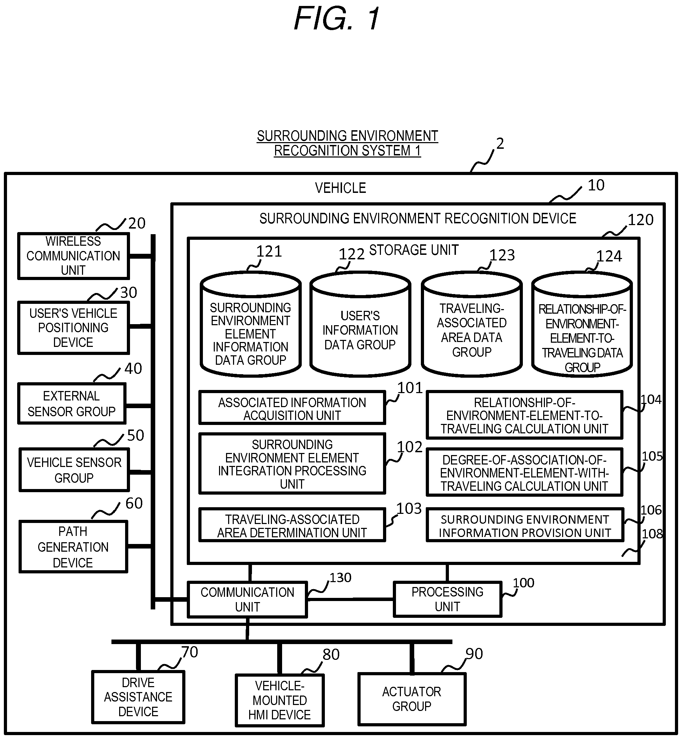

Fig. 1 is a functional block diagram illustrating an example of a configuration of a surrounding environment recognition system 1 according to a first embodiment of the present invention.

As illustrated in Fig. 1, the surrounding environment recognition system 1 according to the present embodiment is a system which is mounted in a vehicle 2 and recognizes a situation of a traveling road or an obstacle such as a neighboring vehicle in the vicinity of the vehicle 2. The surrounding environment recognition system 1 is configured to include a surrounding environment recognition device 10, a wireless communication unit 20, a user's vehicle positioning device 30, an external sensor group 40, a vehicle sensor group 50, a path generation device 60, a drive assistance device 70, a vehicle-mounted HMI device 80, and an actuator group 90.

The surrounding environment recognition device 10, for example, is an Electronic Control Unit (ECU) or the like that is mounted in the vehicle 2, and has a processing unit 100, a storage unit 120, and a communication unit 130. It is noted that no limitation is particularly imposed to a form of the surrounding environment recognition device 10 and that for example, the surrounding environment recognition device 10 may be integrally combined with the drive assistance device 70 or the external sensor group 40 and may be an external device, such as a smartphone, that is connected by a user of the vehicle 2 to a vehicle network.

The processing unit 100, for example, is configured to include a Central Processing Unit (CPU) and a memory such as a Random Access Memory (RAM). The processing unit 100 executes a predetermined operation program that is stored in the storage unit 120, and thus performs processing that realizes a function of a surrounding environment recognition device 10.

The storage unit 120 is configured to include, for example, a storage device, such as a Hard Disk Drive (HDD), a flash memory, or a Read Only Memory (ROM). A program that is executed by the processing unit 100, a data group necessary for realization of the present system, and the like are stored in the storage unit 120.

In the present embodiment, a program, a surrounding environment element information data group 121, a user's vehicle information data group 122, a traveling-associated area data group 123, a relationship-of-environment-element-to-traveling data group 124, and the like are included in the storage unit 120. This program is for causing the processing unit 100 to realize an associated information acquisition unit 101 that acquires information associated with various processing operations from an external apparatus and the like, a surrounding environment element integration processing unit 102 that integrates various pieces of surrounding environment element information that are acquired from the external apparatus and the like into a consistent form without being redundant, a traveling-associated area determination unit 103 that determines an area associated with vehicle 2's prospective traveling, a relationship-of-environment-element-to-traveling calculation unit 104 that calculates a relationship of each environment element to the vehicle 2's traveling, based on the acquired surrounding environment element information on the vicinity of the vehicle 2 and on information relating to the determined area associated with the vehicle 2's traveling, a degree-of-association-of-environment-element-with-travelin g calculation unit 105 that calculates the degree of association of each environment element with the vehicle 2's traveling, a surrounding environment information provision unit 106 that provides information relating to a surrounding environment element to a function or other devices within the surrounding environment recognition device 10, and the like.

For brief description, operation of each of the associated information acquisition unit 101 and the like that are realized by the processing unit 100 performing an arithmetic operation according to the program that is stored in the storage unit 120 is hereinafter described with the associated information acquisition unit 101 and the like, not the processing unit 100, serving as subjects.

The surrounding environment element information data group 121 is a group of pieces of data relating to a surrounding environment that is recognized by the vehicle 2. For example, digital road map data relating to a road in the vicinity of the vehicle 2, recognition data on the vicinity of the vehicle 2 that is acquired from the external sensor group 40 or the wireless communication unit 20, and data that is generated by integrating these pieces of data is included in the surrounding environment element information data group 121. The surrounding environment element information data group 121 is configured with a plurality of "environment elements".

The environment element means an information element that exerts an influence on the vehicle 2's traveling. For example, the environment elements include a vehicle or a pedestrian in the vicinity, an obstacle such as a fallen object, a road form such as a lane center line or a lane border line, a traffic rule such as speed limit, one-way, or a signal, and the like. These information elements have various attributes, but have in common that any of the information elements provides a meaning to a position or an area in space in the vicinity of the vehicle 2. For this reason, in the present specification, the information elements are assumed to be "environment elements" and are handed using a common framework.

The user's vehicle information data group 122 is a group of pieces of data relating to the vehicle 2. For example, pieces of information relating to traveling path information, control plan information, and the like are included in addition to information relating to a position or state of the vehicle 2, which is acquired from the user's vehicle positioning device 30 or the vehicle sensor group 50. The traveling path information, for example, is information that is acquired from the path generation device 60, and is a list of road sections along which the vehicle 2 is scheduled to travel from now on. The control plan information is information as to how the vehicle 2 is controlled from now on, which is determined by the drive assistance device 70, and, for example, includes information relating to a traveling course or a speed plan.

The traveling-associated area data group 123 is a group of pieces of data relating to an area (a traveling-associated area) associated with the vehicle 2's traveling from now on. The traveling-associated area, for example, may be the traveling path information or control plan information itself in the user's vehicle information data group 122, and may be defined as an area that is extended based on the traveling path information and the control plan information.

The relationship-of-environment-element-to-traveling data group 124 is a group of pieces of data indicating a relationship between each environment element and the traveling-associated area.

The communication unit 130, for example, is constituted to include a network card or the like in compliance with a communication specification such as Ethernet (a registered trademark) or Controller Area Network (CAN), and performs reception and transmission of data from and to another device that is mounted in the vehicle 2, based on various protocols. It is noted that a type of connection between the communication unit 130 and another device that is mounted in the vehicle 2 is not limited to a wired connection such as Ethernet and may be a short-distance wireless connection such as Bluetooth (a registered trademark) or wireless Local Area Network (LAN).

The wireless communication unit 20, for example, has a network card or the like in compliance with a long-distance wireless communication specification such as Long Term Evolution (LTE), or a short-distance wireless communication specification such as wireless LAN or Dedicated Short Range Communications (DSRC), and, for example, is configured in such a manner that it is possible to perform data communication with at least any one of a center (whose illustration is omitted) that assists in one or more vehicles' traveling, one or more roadside apparatuses (whose illustration is omitted) that are installed on a road, wireless communication units 20 that are mounted in one or more other vehicles, and one or more communication terminals (whose illustration is omitted) that persons and the like carry.

The user's vehicle positioning device 30 is a device that positions a geographical position of the vehicle 2 and provides information on the geographical position, and to which, for example, a reception device for a global navigation satellite system (GNSS) is equivalent. The user's vehicle positioning device 30 may be simply configured in such a manner as to provide a result of the positioning, which is based on a radio wave that is received from a GNSS satellite, and may be configured to perform position interpolation and error correction, utilizing information that is acquirable from the external sensor group 40 or the vehicle sensor group 50, such as a moving speed or a forward-traveling bearing angle of the vehicle 2.

The external sensor group 40 is a group of sensors that can recognize an obstacle (another vehicle, a bicycle, a pedestrian, a fallen object, or the like) or a marked object (a road sign, a white line, a landmark, or the like) in the vicinity of the vehicle 2, that is, in a fixed range from the vehicle. For example, a camera device, a radar, a laser radar, a sonar, and the like correspond to the external sensor group 40. The external sensor group 40 is configured to output information (for example, a relative angle to and a relative distance from the vehicle 2) on the detected obstacle or marked object in the vicinity of the vehicle 2 on a vehicle-mounted network. The surrounding environment recognition device 10 is configured in such a manner that a result of the output can be acquired through the vehicle-mounted network. It is noted that in the present embodiment, the configuration is employed in which processing that detects the obstacle or the marked object is performed in the external sensor group 40, but that the external sensor group 40 may output non-processed data as is and the detection processing may be performed in other devices such as the surrounding environment recognition device 10.

The vehicle sensor group 50 is a group of devices that detect states (for example, a traveling speed, a steering angle, an amount of operation of an accelerator, an amount of operation of a brake, and the like) of various components of the vehicle 2, and, for example, periodically outputs the state or the amount of operation that is detected, on the vehicle-mounted network, such as the CAN. Devices that include the surrounding environment recognition device 10, which are connected to the vehicle-mounted network are configured in a such a manner that the states or the amounts of operation of various components are possibly obtained.

The path generation device 60 is a device that generates a vehicle 2's traveling path on a road, and for example, the navigation device corresponds to the path generation device 60. The path generation device 60, for example, includes a digital road map data on a predetermined entire area or on roads in the vicinity of the vehicles 2, and is configured in such a manner that a position (a road on which the vehicle is traveling) of the vehicle 2 on a map data is specified based on positional information of the vehicle 2, which is determined in the user's vehicle positioning device 30. Furthermore, the path generation device 60 is configured in such a manner that, based on the specified position of the vehicle 2 on the map and the digital road map data, the traveling path information is generated by calculating a path suitable for reaching a destination that is designated by a user, the traveling path information is notified to the user through the vehicle-mounted HMI device 80, and the traveling path information is provided to the surrounding environment recognition device 10.

The drive assistance device 70, for example, is a ECU for realizing Advanced Driver Assistance Systems (ADAS) for the vehicle 2. For the purpose of increasing fuel efficiency, safety, and convenience, based on surrounding environment recognition information that is output from the surrounding environment recognition device 10, the drive assistance device 70, for example, instructs the actuator group 90 to automatically control acceleration and deceleration or steering of the vehicle 2, or provides information or outputs a warning to a driver through the vehicle-mounted HMI device 80.

The vehicle-mounted HMI device 80, for example, is a display device or the like that is mounted in the vehicle 2, and is configured in such a manner as to notify a driver, through voice or a screen, of the surrounding environment recognition information that is output from the surrounding environment recognition device 10 or information relating to drive assistance that is output from the drive assistance device 70.

The actuator group 90 is a group of devices that controls control elements, such as steering, stopping, and accelerating, that determine moving of the vehicle 2, and is configured in such a manner as to control the moving of the vehicle 2 based on operation information on a steering handle, a brake pedal, an accelerator, and the like, or on a target control value that is output from the drive assistance device 70.

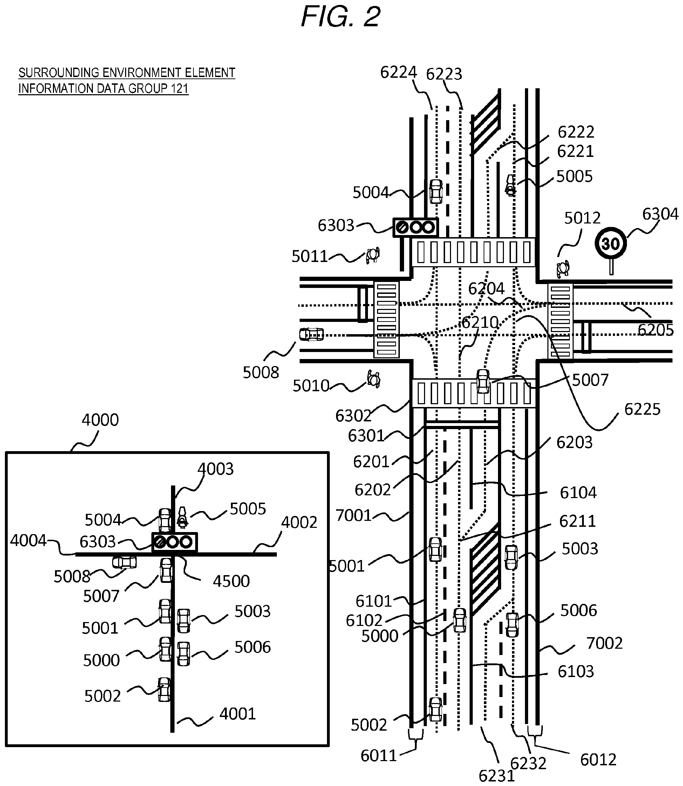

Fig. 2 is a diagram for describing an example of information that is stored in the surrounding environment element information data group 121 according to the present embodiment.

The surrounding environment element information data group 121 results from integrating and expressing the digital road map data relating to the roads in the vicinity of the vehicle 2 and recognition data or the like on the vicinity of the vehicle 2 that is acquired from the external sensor group 40 or the wireless communication unit 20. The granularity of this expression is not particularly limited. In like a lower left portion 4000 of Fig. 2, a format may be employed in such a manner that the environment element is expressed at the macro level on a per-road basis. In addition, in like a right portion of Fig. 2, a format may be employed in such a manner that a road form or a positional relationship of the obstacle is expressed in detail with coordinates in space.

The granularity of these expressions varies according to a functional level of the device that is mounted in the vehicle 2 or a requirement for application. For example, like a map data for a navigation device in the related art, in a case where the road form can be referred to only with the granularity on the per-road basis, an expression is described with the granularity of a lower left portion 4000 of Fig. 2. For example, in a case where, like in automatic drive, the surrounding environment recognition requires high precision, like in an upper portion of Fig. 2, an expression is described in detail with coordinates in space.

The environment elements that are included in the surrounding environment element information data group 121 includes an obstacle, a road form, a traffic rule, and the like.

The obstacles, for example, include vehicles 5000 to 5007, pedestrians 5010 to 5012, bicycles (not described), fallen objects (not described), and structures (not described). In most cases, these are pieces of data that are dynamically recognized by the external sensor group 40 or the wireless communication unit 20.

The road forms are expressed, as spatial forms that have properties of various road surfaces, on a road or in the vicinity (a sidewalk or the like) of the road. The road forms include a lane center line forms 6201 to 6205 of lanes or lane border line forms 6101 to 6104, a lane branching or joining point 6211, forms 6011 and 6012 of road shoulders within a road section, lane portion border line forms 7001 and 7002, a stop line form 6301, a pedestrian crossing form 6302, and the like. Each piece of form information, for example, is expressed with a sequence of points or a line. It is noted that in the present specification, an ID of a lane center line is assumed to be handled as an ID of a lane. For example, a lane that corresponds to a lane center line that is illustrated with 6201 in Fig.2 is expressed as a lane 6201.

The traffic rule is information for placing a restriction vehicle's traveling. The traffic rules, for example, include a signal 6303, a speed limit 6304, an attribute (a direction in which passing is possible, dedication to a bus, a time span for which passing is possible, or the like) of a lane, a lane border attribute (no lane change or no passing), and the like. These are basically managed in the form associated with the road form. For example, because a signal 6303 stipulates whether or not passing of the stop line 6301 is possible, the signal 6303 is managed as attribute information on the stop line 6301. In the same manner, a speed limit, a lane attribute, and a lane border attribute are managed in a state of being associated with the lane.

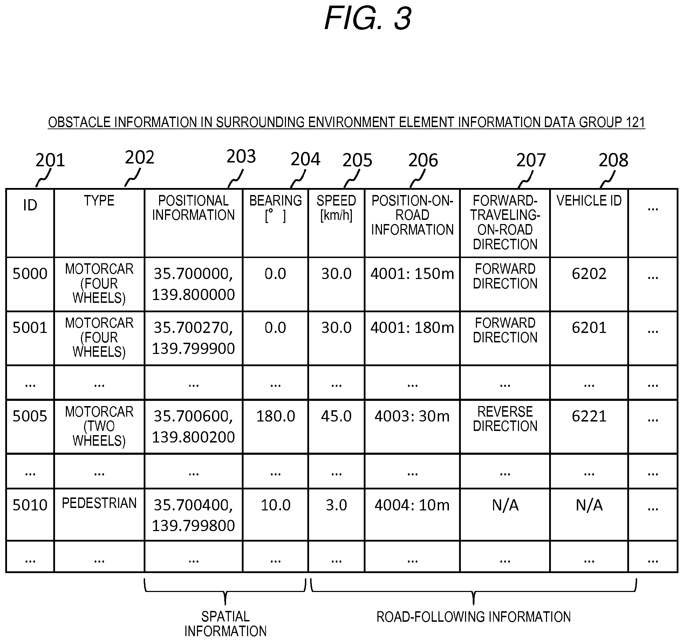

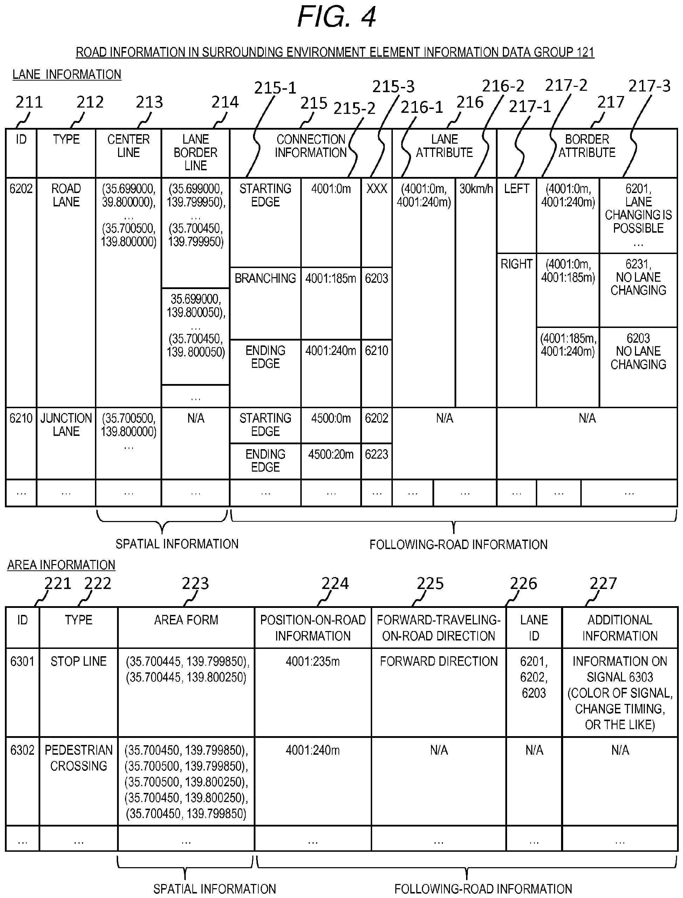

An example of a data structure of the surrounding environment element information data group 121 will be described with reference to Figs. 3 and 4.

The surrounding environment element information data group 121 is broadly configured with two pieces of information, that is, obstacle information and road information. Information relating to the traffic rule is expressed in the form that is incorporated into the road information, as described above. First, a data structure of the obstacle information will be described below with reference to Fig. 3.

An ID 201 is an identifier of an environment element associated with the data entry.

A type 202 indicates a type of environment element associated with the data entry, and for example, includes a motorcar (four wheels), a motorcar (two wheels), a bicycle, a pedestrian, a fallen object, and the like.

A positional information 203 indicates spatial positional information on an environment element associated with the data entry. As in an example in Fig. 3, an expression is described with absolute coordinates, such as latitude and longitude, and an expression is described with relative coordinates with respect to the center of the vehicle 2.

A bearing 204 and a speed 205 indicate a forward-traveling bearing and a speed, respectively, of an environment element associated with the data entry.

Position-on-road information 206, a forward-traveling-on-road direction 207, and a lane ID 208 indicate a position and moving on a road, of an environment element associated with the data entry data. The position-on-road information 206 is information indicating at which position an environment element is present approximately along a following road, and indicates the information using a set of a road section ID that is an identifier of a road section and a following-road distance from a starting point of the road section. For example, an obstacle whose ID in Fig. 3 is 5000 means that the obstacle is present approximately 150 m away from a starting point of a road section 4001.

The forward-traveling-on-road direction 207 is information indicating in which direction an environment element travels with respect to a reference direction of a road section that is indicated by the position-on-road information 206. As illustrated in a lower left portion 4000 of Fig.2, because road sections 4001 to 4004 in the present specification include bidirectional lanes, a forward-traveling direction cannot be specified only with the road section ID. For this reason, the direction in which the environment element travels along a road is specified by including a relative direction to a reference direction of a road section information as well. The lane ID 208 is an identifier of a lane on which the environment element is present. The lane ID 208 is set in a case where a lane position of corresponding environment element is specified. It is noted that this does not mean that a value of each lane position can be necessarily specified, and that an invalid value "N/A" is stored in a case where the land position cannot be specified.

Next, a data structure of the road information will be described with reference to Fig. 4. The road information is categorized into road section information, lane information, and area information expressing information on an environment element other than these pieces of information. The road section information, for example, is equivalent to the map data for the navigation device in the related art, and expresses a form or a connection relationship of the road section on a per-road basis, information relating to a junction linking a plurality of road sections, and the like.

First, lane information will be described. An ID 211 and a type 212, like the ID 201 and the type 201 of the obstacle information, indicate an identifier and a type of the environment element, respectively. As types, there are a road lane and a junction lane. The road lane indicates a lane of the road section. The junction lane indicates a traveling course within the junction, which is recommended, as a virtual lane.

The center line 213, for example, expresses a form of the centerline of the lane, as a sequence of points, and has a list structure in which positional information on a form point of each is stored.

A lane border line 214, for example, expresses a form of a border line of the lane as a sequence of points, and has the same list structure as the center line 213. It is noted that because, in some cases, in addition to being present to the left and right of a lane, for expression, the lane border line 214 is divided into a plurality of lines as forms, the lane border line 214 includes a plurality of positional information lists.

Connection information 215 indicates a connection relationship of the lane to another lane, and for example, is expressed with a list of a connection point type 215-1, a connection-point road-following position 215-2, and a connection destination ID 215-3.

The connection point type 215-1 indicates a type of connection point, and for example, includes a starting edge and an ending edge of a corresponding lane (which are referred to as a "starting edge" and an "ending edge", respectively), a connection point that branches off from the lane and a junction that joins the lane (which are referred to as a "branching" and a "joining", respectively), and the like.

The connection-point road-following position 215-2 is information that indicates at which position an environment element is present approximately along the following road, in the same manner as the position-on-road information 206 that is the obstacle information.

The connection destination ID 215-3 is an identifier indicating to which lane the connection point connects. For example, the second connection information on lane 6202 in Fig.4 indicates that a lane 6203 branches off from the lane 6202.

A lane attribute 216 indicates a limited speed or an attribute (a direction in which passing is possible, dedication to a bus, a time span for which passing is possible, or the like) on the lane), and for example, is expressed with a list of a lane attribute information range 216-1 and a lane attribute information 216-2.

The lane attribute information range 216-1 is expressed with a range that depends on a following road. For example, (4001:0 m, 4001:240 m) means a 0 to 240 m range of a road section 4001. Then, a limited speed or attribute information in this range on the lane is expressed with 216-2.

A border attribute 217 indicates an attribute relating to a border line of the lane, and for example, is expressed with a list of a border line direction 217-1, a border attribute information range 217-2, and a border attribute information 217-3.

The border line direction 217-1 is an identifier of whether the border information entry relates to the left side or the right side.

The border line direction 217-2 is expressed with the range that depends on a following road, and information relating to the border line attribute in this range is expressed with the border attribute information 217-3.

The border attribute information 217-3, for example, includes an ID of an adjacent lane with which the corresponding lane is in contact with the border line in between, information as to whether or not passing the corresponding lane is possible for lane departure, lane changing, or passing (is also possible with line-type information such as a solid line or a broken line), and the like.

Next, the area information will be described. An ID 221 and a type 222, like information IDs 201 and 211 and the types 202 and 212 of the obstacle information and the lane information, indicates an identifier and a type of the environment element, respectively.

An area form 223, for example, expresses a form of the area as a sequence of points, and has a list structure in which positional information on a form point of each is stored. For example, a stop line 6301 is expressed with coordinates of two points as a line segment and coordinates of five points as a quadrangle (a closed section) with a width in a pedestrian crossing.

Position-on-road information 224, a forward-traveling-on-road direction 225, and a land ID 226 are the same as 206 to 208, respectively, in the obstacle information.

Additional information 227 is information that accompanies the area information. For example, because information on the signal 6303 is associated with the stop line 6301, information, such as a current color (a color at the time of observation) or a coming change timing of the signal 6303, is stored in the stop line 6301.

It is noted that although not described in the present specification, each data entry of the lane information and the area information are managed in a state of being associated with a data entry of the associated road section information. For example, because the lane 6202 or the stop line 6301 belongs to the road section 4001, the lane 6202 or the stop line 6301 is associated with the data entry of the road section information that is equivalent to the road section 4001. For this reason, a configuration is employed in such a manner that it is possible that the lane information or the area information which is associated is easily referred to from information on a unit of a road.

Furthermore, the lane information and the area information are basically configured based on information of the digital road map data, but may be further configured based on information that is recognized by the external sensor group 40 or the like.

In the present embodiment, regarding each surrounding environment element information described above, information that is expressed with coordinates in space and information that is expressed with a coordinate system that depends on a following road are referred to as "spatial information" and "following-road information", respectively. For example, in the obstacle information in Fig. 3, the positional information 203 and the bearing 204, and the speed 205 to the lane ID 208 are assumed to be handled as "spatial information" and "following-road information, respectively. In the lane information in Fig. 4, the center line 213 and the lane border line 214, and the connection information 215 to the border attribute 217 are assumed to be handed as "spatial information" and "following-road information, respectively. In the area information in Fig. 4, the area form 223 and the position-on-road information 224 to the additional information 227 are assumed to be handled as "spatial information" and "following-road information, respectively.

It is noted that because the spatial information is expressed in a two-dimensional (or three-dimensional) manner, a place, such as a curve, that changes in a two-dimensional manner needs a large amount of information. In contrast, because the following-road information is expressed, in a one-dimension manner, along a following road, a feature of the following-road information is that the information accuracy decreases but an express can be described with a small amount of information without depending on the road form.

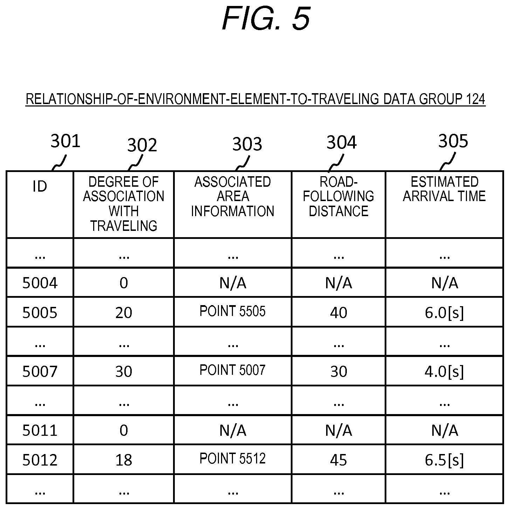

An example of a data structure of the relationship-of-environment-element-to-traveling data group 124 will be described with reference to Fig. 5.

An ID 301 is an identifier of an environment element associated with the data entry, and corresponds to the IDs 201 and 211, and 221 of the surrounding environment element information data group 121 that is illustrated in Figs. 3 and 4.

A degree 302 of association with traveling results from digitalizing the degree to which the environment element is associated with the vehicle 2's prospective traveling. This means that the higher a numerical value, the higher the relevance.

An associated area information 303 refers to a point, a section, or an area on a vehicle 2's traveling path, in which the environment element is associated with the vehicle 2's prospective traveling.

A following-road distance 304 refers to a distance from the vehicle 2 to a point, a section, or an area that is indicated with the associated area information 303, which depends on a following road. It is noted that in the case of the section or the area, a range that overlaps the vehicle 2's traveling path has a width, but that the width may be expressed as a following-road distance and may be expressed as a following-road distance that results when the closest point when viewed from the vehicle 2 serves as a reference point.

An estimated arrival time 305 refers to the estimated time taken to arrive at the point, the section, or the area that is indicated by the associated area information 303.

Subsequently, operation of the surrounding environment recognition system 1 will be described. Based on the surrounding environment element information that is acquired from various external devices 20 to 60 or on information relating to the user's vehicle, the surrounding environment recognition device 10 of the surrounding environment recognition system 1 according to present embodiment extracts the surrounding environment element information that is necessary for the drive assistance device 70, the vehicle-mounted HMI device 80, or the like, and performs surrounding environment recognition processing.

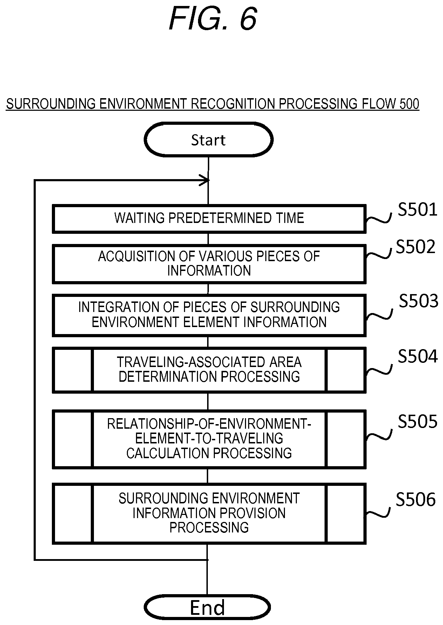

Fig. 6 illustrates a surrounding environment recognition processing flow 500 that is performed in the surrounding environment recognition system 1 according to the present embodiment.

The associated information acquisition unit 101 first waits a predetermined amount of time (Step(S) 501), and then acquires various pieces of information necessary for the surrounding environment recognition processing (S502). At this point, waiting the predetermined amount of time refers to waiting the time taken to trigger generation of the surrounding environment element information. The triggering may be set to be performed every fixed time, using a timer and may be set to be performed on demand by detecting the necessity to update the surrounding environment element information.

Various pieces of information that are acquired in S502 are information on user's vehicle information, such as positional information or sensor information that is acquired from the user's vehicle positioning device 30 and the vehicle sensor group 50 of the vehicle 2, recognition data that is obtained from the wireless communication unit 20, the external sensor group 40, and the like, and digital road map data relating to the vicinity of the vehicle 2 that is acquired from the path generation device 60 and the like, which are necessary for subsequent processing, and are acquired from the surrounding environment element information data group 121 and the user's vehicle information data group 122 in the storage unit 120. It is noted that for the surrounding environment element information data group 121 or the user's vehicle information data group 122, the latest data is assumed to be obtained, for update, by the associated information acquisition unit 101 at a suitable timing from an external device or the like through the vehicle's network.

Next, in S503, regarding various pieces of information that are acquired by different means, the surrounding environment element integration processing unit 102 integrates pieces of information relating to the same target object (performs so-called correlation), or associates the recognition data and the digital road map data with each other (performs so-called map matching). Accordingly, as a general rule, consistent integrated surrounding environment element information is generated without being redundant. The generated surrounding environment element information is assumed to be stored in the surrounding environment element information data group 121.

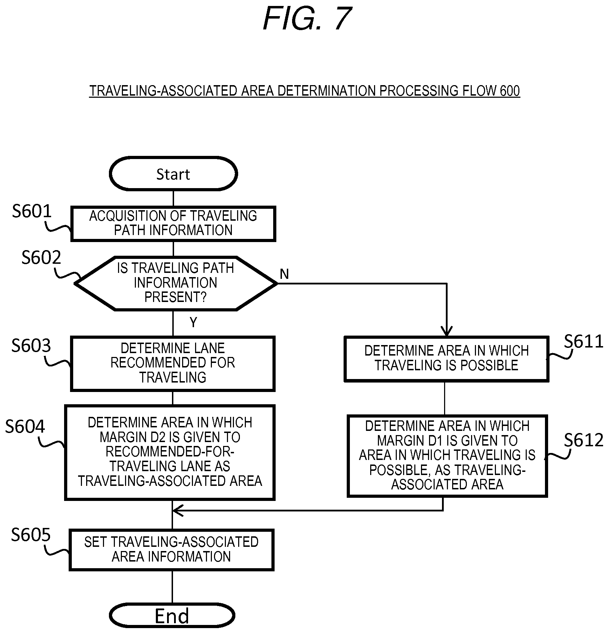

Subsequently, in S504, the traveling-associated area determination unit 103 performs traveling-associated area determination processing 600 that determines the traveling-associated area which is an area associated with the vehicle 2's traveling from now on. The traveling-associated area determination processing 600 will be described in detail below with reference to Figs. 7 to 10.

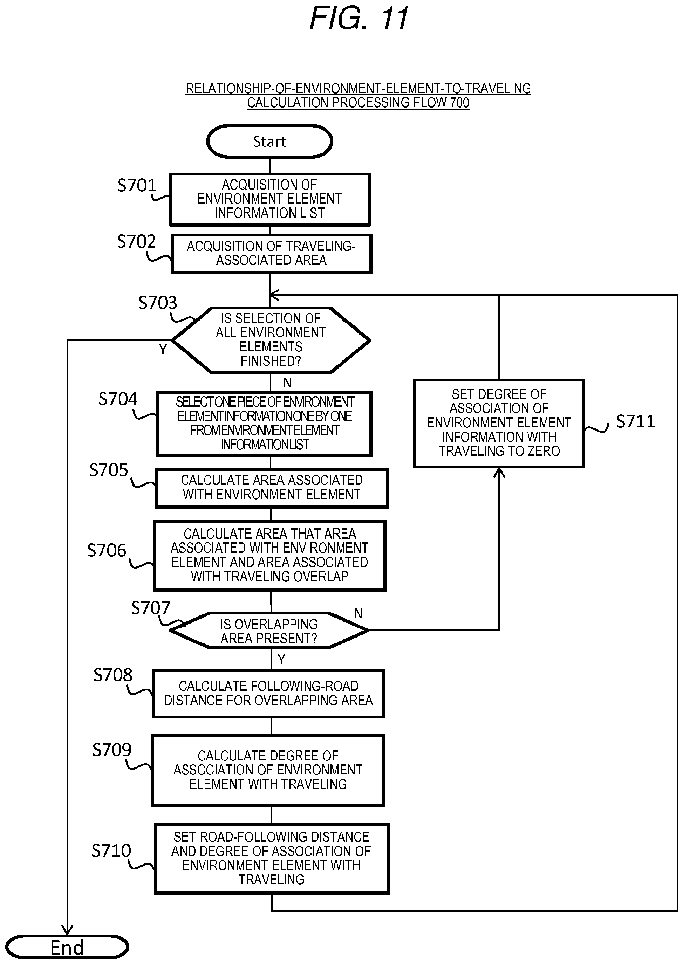

When the traveling-associated area determination processing (S504) is completed, based on the traveling-associated area that is determined in S504, the relationship-of-environment-element-to-traveling calculation unit 104 performs relationship-of-environment-element-to-traveling calculation processing 700 (S505) that calculates a relationship of each environment to the vehicle 2. The relationship-of-environment-element-to-traveling calculation processing 700 will be described in detail below with reference to Fig. 11.

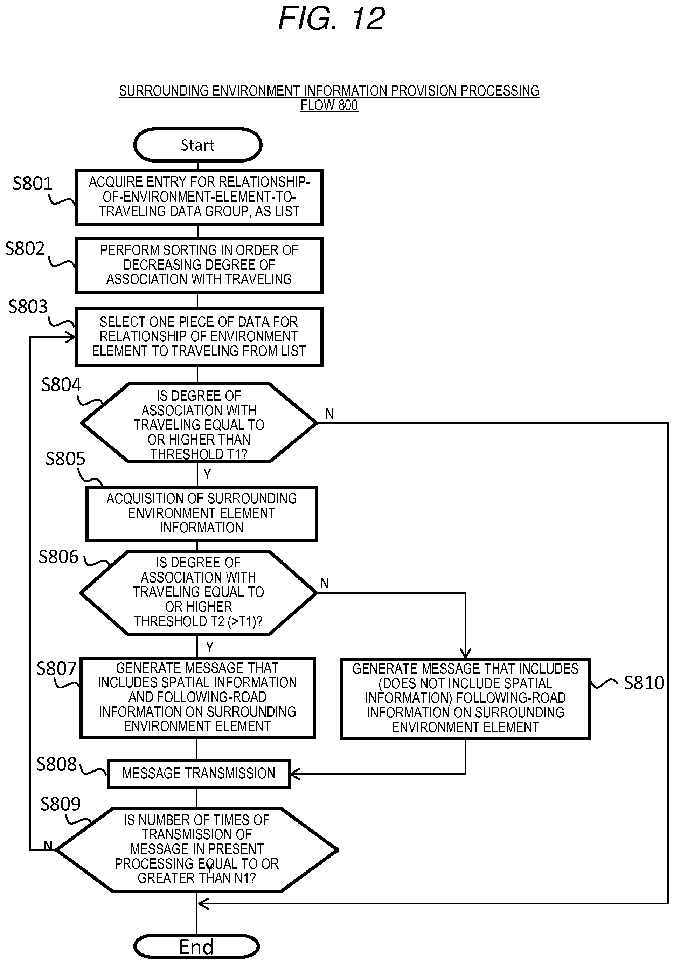

When the relationship-of-environment-element-to-traveling calculation processing (S505) is completed, the surrounding environment information provision unit 106 performs the surrounding environment information provision processing 800 (S506) that outputs one or several pieces of information in the surrounding environment element information data group 121, as pieces of surrounding environment information, to the drive assistance device 70, the vehicle-mounted HMI device 80, or the like. Then, thereafter, returning to S501 takes place, and the processing described above is performed repeatedly. Surrounding environment information provision processing 800 will be described in detail below with reference to Figs. 12 to 14.

### <<Traveling-associated Area Determination Processing 600 (S504)>>

Fig. 7 illustrates an example of a flowchart for the traveling-associated area determination processing 600.

First, in S601, the traveling-associated area determination unit 103 acquires the traveling path information from the user's vehicle information data group 122. In a case where the traveling path information is not present (Yes in S602), proceeding to S603 takes place. On the other hand, in a case where the traveling path information is not present (No in S602), an available-for-traveling area is determined based on the surrounding environment element information that is generated in S503 (S611). The available-for-traveling area means a geographical range that is available for the vehicle 2's traveling, within a predetermined time or within a predetermined distance range from now on.

For example, the available-for-traveling area may be defined as an entire lane area (an area that is narrowed in the lane portion line form) in a direction in which the vehicle 2 travels from a position of the vehicle 2, within a predetermined distance range, be defined as being narrowed down to a lane area portion in the forward-traveling direction, not as the entire lane area, and be defined as the entire lane area within the predetermined distance range, regardless of the forward-traveling direction. This method of determining the available-for-traveling area may be changed according to a road environment or a control mode. For example, on the other hand, the available-for-traveling area is determined as an entire lane area in the forward-traveling direction without a predetermined distance range while traveling on a highway. However, because there is a need to take an extensive view not only in the forward-traveling direction, but also of the entire lane area while traveling in a parking lot (or while in the control mode for parking), it is also possible that the available-for-traveling area is determined as the entire lane area within the predetermined distance range regardless of the forward-traveling direction.

Then, next, an area in which a margin d1 (≥0) is given to a border of the available-for-traveling area that is determined in S611 is determined as the traveling-associated area (S612), and the traveling-associated area is set for the traveling-associated area data group 123 (S605). Thus, the processing is ended.

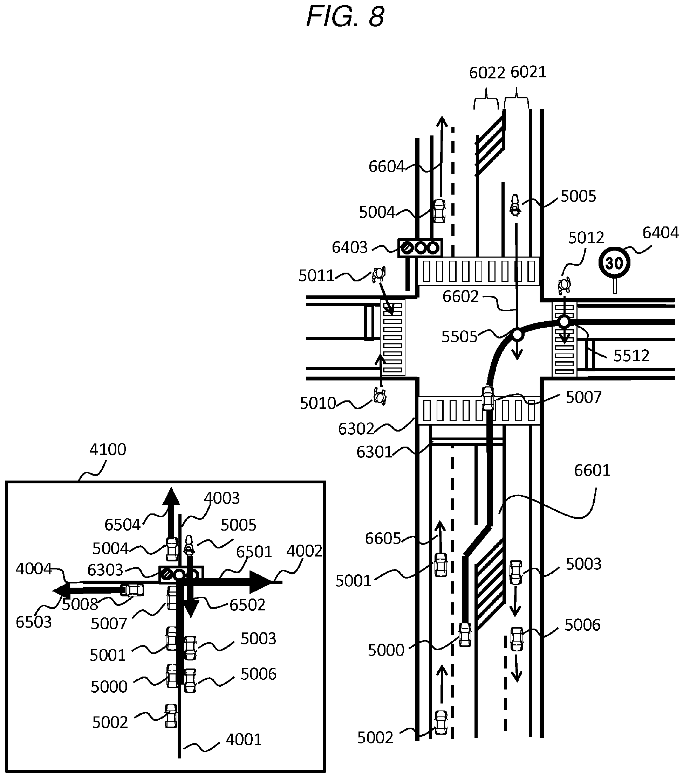

In a case where the traveling path information is present (Yes in S602), a recommended-for-traveling lane is determined in S603. The traveling path information and the recommended-for-traveling lane will be described with reference to Fig. 8. It is noted that in Fig. 8, a vehicle 5000 is expressed as being selected as a user's vehicle.

The traveling path information, as illustrated with 6501 in a lower left portion 4100 of Fig. 8, for example, is expressed on a per-road basis. In an example in Fig. 8, the user's vehicle 5000 travels along a road section 4001, and then turns right at the next junction and selects a road section 4002 as a path for traveling. In S603, the path on a per-road basis is changed to a path on a per-lane basis. In the present specification, the path on a per-lane basis is assumed to be referred to as the recommended-for-traveling lane. Specifically, in order to satisfy a restriction condition for arrive at the next road section on the path, the surrounding environment element information data group 121 or the user's vehicle information data group 122 is referred to, and a traveling lane position of the user's vehicle, lane connection information on an adjacent road section on a path, an attribute (no lane change or the like) of a lane border line, a lane attribute (a direction in which forward-traveling is possible, dedication to a bus, a time span for which traveling is possible) and the like used.

For example, because in Fig. 8, the vehicle 5000 is traveling along a road section 4001 (refer to Fig. 2) and the path for traveling the road section 4002 is elected, a junction lane of which an ending edge is a lane 6205 that is a lane in the forward-traveling direction in the road section 4002 is searched for referring to the connection information 215 of the lane information in Fig. 4. Junction lanes that result from the search is a junction lane 6204, a junction lane for turning left at a lane 6221 and entering a lane 6205, and a junction lane for traveling straight and entering a lane 6205. Moreover, when a junction lane that connects to a lane of the road section 4001 is selected referring to connection information on starting edges of these junction lanes, it is understood that only the junction lane 6204 is connected to the lane 6203 that belongs to the road section 4001. On the other hand, because the traveling lane for the vehicle 5000 is 6202, in order to face the road section 4002, moving from the lane 6202 to the lane 6203 is needed within the road section 4001.

Then, a range of lanes in which moving from a current vehicle position (the lane 6202) to the lane 6203 is possible is specified referring to the connection information 215 or the border attribute 217 of the lane information in Fig. 4, which relates to a lane group (6201, 6202, and 6203) that belong to the road section 4001. A branching point 6211 to the lane 6203 as connection information on the lane 6202 is 35 m ahead (this is because position-on-road information on the vehicle 5000 is 4001:150 m and positional information on a branching point is 4001:185 m), and lane changing to the lane 6203 at other than the branching point as a border attribute is not possible. Because a path for the lane changing to the lane 6203 at the branching point is specified as a path on a per-lane basis in the road section 4001.

According to the preceding description, as is illustrated with a bold line 6601 in the right-side portion of Fig. 8, a path in which a vehicle travels a 150 m to 185 m section of the lane 6202, then moves to lane 6203 at the branching point 6211, and travels toward the lane 6205 of the road section 4002 via the junction lane 6204 is specified as a recommended-for-traveling lane for the vehicle 5000.

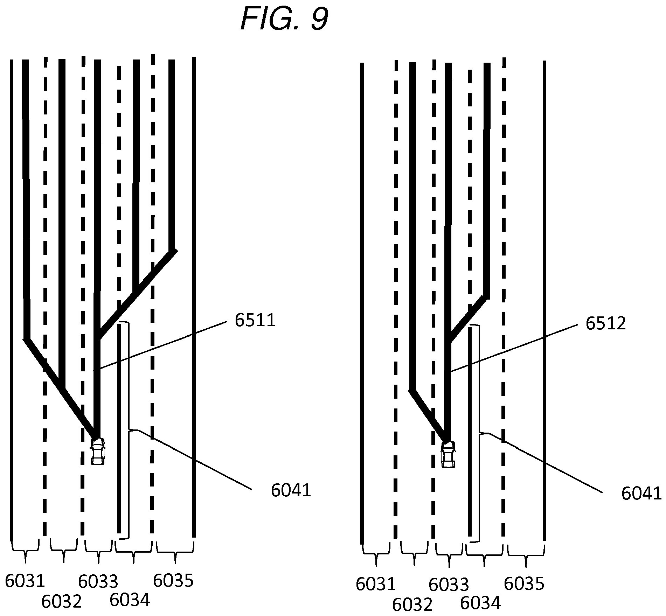

It is noted that as the recommended-for-traveling lane, one lane is not necessarily selected in the same road section, and in some cases, a plurality of lanes are selected. For example, in a case where any lane is connected to the next road section on a path on a five-lane road as illustrated in Fig. 9, because in the lane border line 6041, there is no particular restriction other than the restriction that the lane change is not possible, the recommended-for-traveling lane includes a plurality of lanes as illustrated with a bold line 6511 in a left portion of Fig. 9. Furthermore, a restriction condition for drive behavior, such as limiting the number of times of unnecessary lane changing, as well as a restriction condition due to a traffic rule for a road, may be taken into consideration.

For example, when a restriction condition that the number of times of unnecessary lane change < 1 is added, the recommended-for-traveling lane, as illustrated with a bold line 6512 in a left portion of Fig. 9, is calculated. As described above, by specifying the traveling path on a per-lane basis, it is possible that an area associated with the vehicle 2's traveling is narrowed down by comparison with the traveling path on a per-road basis.

Information of the recommended-for-traveling lane is expressed with one-dimensional information in the same manner as the following-road information. For example, each of the lane section on the recommended-for-traveling lane is expressed with a pair of a lane ID and a range of distance from a starting point of the road section, such as (6202:150 m to 185 m). For example, recommended-for-traveling lanes in Fig. 8 are expressed as (6202:150 m to 185 m), (6203:185 m to 240 m), (6204:0 m to 20 m), (6205:0 m to X m), and so forth.

Subsequently, a traveling-associated area is determined according to the recommended-for-traveling lane that is determined in S603 (S604), then sets the traveling-associated area to be in the traveling-associated area data group 123 (S605), and the processing is ended. Specifically, an area in which a margin d2 (≥0) is given to the recommended-for-traveling lane is assumed to be the traveling-associated area.

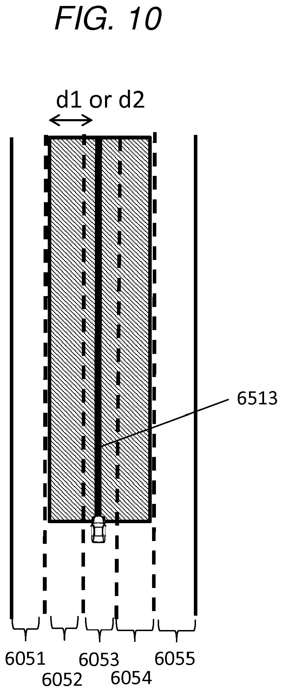

In a case where the margin d1 and the margin d2 are zero, a portion that is equivalent to a lane center line of the recommended-for-traveling lane is the traveling-associated area. In a case where the margin d1 and the margin d2 are set to a value as illustrated in an example in Fig. 10, the traveling-associated area is a range that also includes an adjacent lane. When a person drives, although, for example, his vehicle is traveling along a specific lane, drive behavior is determined in view of a situation of an adjacent lane, an adjacent road shoulder or sidewalk, or the like. Accordingly, by giving the margin d1 and the margin d2 to the recommended-for-traveling lane, an adjacent area is also considered as the traveling-associated area.

It is noted that in the present processing flow, the path information on a per-road unit is reduced in size to the path information on a per-lane basis, which is referred to as the recommended-for-traveling lane, and then the traveling-associated area is defined in space, but that the traveling-associated area may be defined, at the macro level, as the path information on a per-road basis, as is.

Furthermore, although not described in the present processing flow, the traveling-associated area may be defined based on the control plan information that is acquired from the drive assistance device 70. In a case where the vehicle 2 operates in an automatic drive mode, the drive assistance device 70 determines at which speed the vehicle 2 is controlled on which course. The pieces of information are referred to as pieces of control plan information. It is possible that the processing steps (S601 to S604) for the traveling path as described above, which is equivalent to, so to speak, the traveling path at a short distance is applied, in the same manner, to the control plan information. It is noted that the control plan information does not necessarily need to be fixed, and that it is also possible that the control plan information is applied to a pre-fixation plan candidate group (a plurality of course plans and a set of speed plans).

### <<Relationship-of-environment-element-to-traveling Calculation Processing 700 (S505)>>

Fig. 11 illustrates an example of a flowchart for the relationship-of-environment-element-to-traveling calculation processing 700.

First, the relationship-of-environment-element-to-traveling calculation unit 104 acquires a list of pieces of surrounding environment element information that are generated in S503, from the surrounding environment element information data group 121 (S701), and acquires the traveling-associated area information that is determined in S504 (S702).

Subsequently, the relationship-of-environment-element-to-traveling calculation unit 104 checks whether or not the following processing is performed on all pieces of surrounding environment element information that are included in the acquired list of pieces of surrounding environment element information (S703). If the following processing on the all pieces of surrounding environment element information is finished (Yes in S703), the processing is ended. On the other hand, if not so (No in S703), one piece of surrounding environment element information that is not selected in the present processing flow is selected from the list of pieces of surrounding environment element information (S704), and the subsequent processing is performed.

The relationship-of-environment-element-to-traveling calculation unit 104 calculates an area associated with the environment element that corresponds to the selected surrounding environment element information (S705). The area associated with the environment element is a positional range that results when it is assumed that the environment element is present at the present or in future. The area associated with the environment element is determined using one or more pieces of information, among a current position (an observation position), moving information (a speed, a forward-traveling direction, acceleration, or the like), an environment element type (a vehicle, a pedestrian, or the like), and a road environment (a lane form, an obstacle, or the like) of the environment element. For example, a moving course of the environment element within a predetermined time from now on is estimated from moving information and the road environment of the environment element, and the moving course itself may be set as the associated area and may be set as an area in which a margin is given to the moving course. It is noted that the moving course of the environment element is time series data relating to an estimated value of a prospective position of the environment element, and may be expressed as position coordinates and a continuous value as a function of time and may be expressed as a list of position coordinate values at a discrete point (time) in time.

Alternatively, for example, an area in a predetermined range of a distance from a current position of the environment element may be expressed as the associated area. This is effective in a case where the randomness is entailed as with a behavior of a pedestrian and where it is difficult to estimate a precise moving course. Alternatively, for example, in a case where a plurality of candidates for the moving course are present like vehicle immediately before a junction, areas that are generated by individual moving courses may be merged to create an associated area. Alternatively, for example, in a case where the traveling-associated area that is determined in S504 is defined at the macro level on a per-road basis, in accordance with this, the associated area may be defined on a per-road basis as well.

Next, the relationship-of-environment-element-to-traveling calculation unit 104 compares the area associated with the environment element and the positional relationship of the vehicle 2 to the traveling-associated area, and calculates an area where both overlap (S706). If the overlapping area is present (Yes in S707), proceeding to S708 takes place. On the other hand, in a case where the overlapping area is not present (No in S707), the degree of association of an environment element with traveling is set to "0" (S711), and returning to S703 takes place.

As an example of determination of the overlapping area, in a case where the traveling-associated area or the area associated with the environment element is defined on a per-road basis, the overlapping area is determined depending on whether the road sections that are designated with areas, respectively, overlap. In a lower left portion 4100 of Fig. 8, in a case where a traveling-associated area is equivalent to the path 6501 and an associated area of a vehicle 5005 is equivalent to 6502, because lines of both intersect, it is determined that an overlapping area is present. On the other hand, an associated area 6503 of a vehicle 5008 or an associated area 6504 of a vehicle 5004 do not intersect the traveling-associated area 6501, it is determined that there is no overlapping area.

Furthermore, as an example of the determination of the overlapping area, in a case where the traveling-associated area or the associated area is defined with coordinates in space, it is determined whether or not the areas overlap. In a right portion of Fig. 8, in a case where a traveling-associated area is equivalent to a recommended-for-traveling lane 6601 and an associated area of a vehicle 5005 is equivalent to an assumed course 6602, because both intersect at a point 5505, it is determined that there is an overlapping area.

Because a vehicle 5007 runs along the traveling-associated area as well, in the same manner, it is determined that there is an overlapping area. On the other hand, because an associated area (an assumed course) does not overlap a traveling-associated area, it is determined that other vehicles or pedestrians 5010 and 5011 do not have overlapping areas.

In this manner, there is no restriction on the granularity of the definition of the traveling-associated area or the associated area, but the smaller the granularity, the more precisely it is possible to determine the presence or absence of the overlapping area.

Next, when proceeding to S708 takes place, the relationship-of-environment-element-to-traveling calculation unit 104 calculates a following-road distance from the vehicle 2 or a range of thereof for the overlapping area that is calculated in S706. The following-road distance is not a distance in a straight line in space, and is a distance of the following-road along the traveling path from the position of the vehicle 2 with respect to a reference point for a target. In a case where the overlapping area has a width along the following road, a range thereof is expressed with a starting point (30 m) and an ending point (40 m) in the following-road distance, for example, such as (30 m, 40 m). It is noted that even in a case where the overlapping area has the width, for example, the range may be expressed with the following-road distance from a representative point that is the closest point to the vehicle 2 along the following road.

It is noted that these pieces of following-road information are configured based on following-road information on the surrounding environment element information data group 121 that is illustrated in Figs. 3 and 4. The following-road information on the surrounding environment element information data group 121 expresses a position of the environment element with the following-road distance with a starting point of a road as a reference, but it is possible that a difference with a road positional information (a road ID and the following-road distance on a road with the road ID) on the vehicle 2 is taken and is converted into information with a vehicle position of the vehicle 2 as the origin. Furthermore, according to the traveling path for the vehicle 2, lengths of roads that the vehicle 2 passes through are integrated and thus the road-following distance along a path can be calculated.

Subsequently, the degree-of-association-of-environment-element-with-travelin g calculation unit 105 calculates the degree of association of an environment element with traveling based on the relationship of an environment element to traveling, which has so far been calculated (S709). The degree of association with traveling is equivalent to what results from digitalizing the degree of the relationship of the environment element to traveling, and the degree of association is set in such a manner that the closer the overlapping area is to a path, the more shortened is the time taken to arrive at the overlapping area.

For example, when the following-road distance that is calculated in S708 is assumed to be dr, the degree of association with traveling is calculated using the mathematical formula a × (1/dr) (a is a constant) in which the degree of association with traveling is in inverse proportion to the following-road distance. Furthermore, for example, when the time taken to arrive at the overlapping area is assumed to be t, the degree of association with traveling is calculated using the mathematical formula b × (1/t) (b is a constant) in which the degree of association with traveling is in inverse proportion to the time takes to arrive at the overlapping area. It is noted that in either case, no mathematical formula expressing that the shorter the following-road distance or the arrival time to the overlapping area, the higher the degree of association is limited to the formula described above.

Furthermore, a mathematical formula a × (1/dr) + b × (1/t), which results from considering both the mathematical formulas described above may be available. Furthermore, according to a type of environment element, various parameters or a calculation method may be changed.

When the processing in S709 is completed, the following-road distance and the degree of association with traveling that are completely calculated are set to be an entry of the environment element in the relationship-of-environment-element-to-traveling data group 124, and returning to S703 takes place. Thereafter, the same processing is performed until the processing relating to pieces of surrounding environment element information is completed, and the processing flow is ended.

### <<Surrounding Environment Information Provision Processing 800 (S506)>>

Fig. 12 illustrates an example of a flowchart for surrounding environment information provision processing 800.

First, data entries that are included in the relationship-of-environment-element-to-traveling data group 124 is acquired as a list (S801), and lists are sorted in order of decreasing the degree of association with traveling (S802). Subsequently, a data entry for the relationship of an environment element to traveling is selected one by one, in order of decreasing the degree of association with traveling, from the list (S803), and the following processing is performed.

First, in a case where a degree 302 of association with traveling of the selected data entry for the relationship of an environment element to traveling is equal to or higher than a predetermined threshold T1 (Yes in S804), proceeding to S805 takes place. On the other hand, in a case where the degree 302 falls below the predetermined threshold T1 (No in S804), the present processing is ended. This results in bringing about an effect in which information that does not have much relationship to the vehicle 2's traveling is excluded from a provision target.

For example, in a relationship-of-environment-element-to-traveling calculation flow 700 in Fig. 11, an environment element of which an associated area does not overlap a traveling-associated area for the vehicle 2 is set to zero as the degree of association with traveling. For this reason, in a case where T1>0, these environment elements are excluded from the provision target. For example, in a case where the traveling path for the vehicle 2 is defined as the traveling-associated area, the environment element of which the moving course does not overlap the traveling path for the vehicle 2 is excluded from the provision target. Furthermore, because the longer the following-road distance or the arrival time to the overlapping area or the arrival time, the lower the degree of association with traveling, an environment element that is a predetermined distance away is excluded from the provision target as well.

In a case where the degree of association with traveling of the information is equal to or higher than the threshold T1, the surrounding environment element information that has the corresponding ID 201 is acquired from the surrounding environment element information data group 121, with the ID 301 as a search key (S805). Moreover, of the degree of association with traveling is equal to or higher than a predetermined threshold T2 (>T1) (Yes in S806), a message that includes both of the spatial information and the following-road information is generated referring to the surrounding environment element information (S807), and the generated message is transmitted, as the surrounding environment information for the vehicle 2, to a suitable destination (S808). On the other hand, in a case where the degree of association with traveling is lower than the threshold T2 (and is equal to or higher T1) (No in S806), a message is generated based on the following-road information from which the spatial information is omitted (S810), and the generated message is transmitted, as the surrounding environment information for the vehicle 2, to a suitable destination (S808).

This means that regarding a environment element of which the degree of association with traveling is comparatively low (equal to or higher than T1 and lower than T2), the message from which the spatial information is omitted is transmitted. When the traveling source to which the steering relates is calculated, the spatial information on the environment element is necessary for the control of the vehicle. In a road environment that varies from moment to moment, the time for which the traveling course is effective is approximately 5 seconds to 10 seconds at the most. For reason, the necessity to provide the spatial information on the environment element beyond such a range is small.

On the other hand, the following-road information on the environment element is used for determination of the drive behavior and the acceleration and deceleration control.
The drive behavior or the acceleration and deceleration control is necessary for knowing at a macro level an obstacle, a traffic situation, or a traffic rule in the forward, backward, leftward, and rightward directions along a lane structure of a road, and for calculating an optimal drive behavior plan (for example, a plan for at which timing the lane changing is performed), or a speed plan while estimating a situation that will occur approximately 20 seconds to 30 seconds later. For this reason, it is necessary to provide pieces of information on roads up to and including a comparatively remote road. For this reason, when it comes to the degree of association with traveling that is lower than a predetermined value in this manner (when it comes to a remote distance that is greater than a predetermined distance range or an arrival range within a predetermined time), it is possible that by performing transmission in a state where the spatial information is omitted, an amount of data to be provided is reduced while satisfying a requirement on the control side.

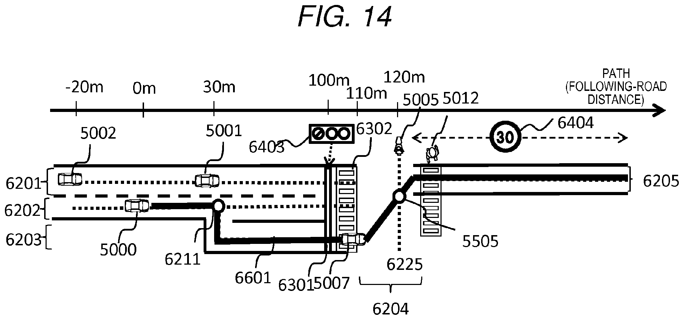

Fig. 14 illustrates an example of the following-road information that is equivalent to the spatial information that is illustrated in Fig. 8. The following-road information, which is generated along a path, results from expressing a positional relationship to each environment element with a lane ID that is associated with a following-road distance with the vehicle position of the vehicle 2 as the origin. The surrounding environment element information that is a target for the following-road information is basically equivalent to following-road information in the surrounding environment element information data group 121 in Figs. 3 and 4. Pieces of lane information, such as obstacle information that is associated with a road, a lane border line attribute (no lane changing or the like), and a lane connection point (a lane branching point 6211, a lane junction 5505, or the like), traffic rules, such as a stop line 6301, a pedestrian crossing 6302, signal information 6403 (equivalent to information on a signal 6303), and limited speed information 6404 (equivalent to a road sign 6304), a recommended-for-traveling lane 6601 that is determined in the traveling-associated area determination processing in Fig. 7, and the like correspond to the surrounding environment element information that is a target for the following-road information.

It is noted that although not illustrated in the present embodiment, the expression of a form of a curve or a sloping road as a curvature value or a gradient value may be included, and that the expression of the form of the curve or the sloping road as a combination with the following-road distance or as a function of the following-road distance may be included. In this expression type, because the spatial information is not expressed, an environment in the vicinity of the user' s vehicle cannot be recognized in detail, but it is possible that by comparing the lane ID and the following-road distance, environment information in the forward and backward directions, of the user's vehicle with a lane as an axis, which is necessary for the drive behavior plan or the acceleration and deceleration control, is referred to with ease (at high speed).

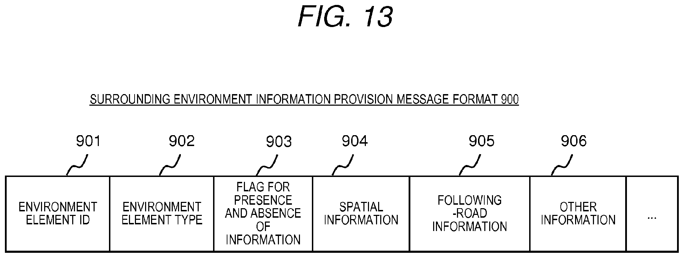

Fig. 13 is a diagram for describing an example of a format 900 of a surrounding environment information provision message that is transmitted by the surrounding environment recognition device 10 according to the present embodiment. However, illustration of header information relating to a communication protocol and the like is omitted.

The surrounding environment information message includes information on each environment element. Pieces of information on the environment element, which are included in the message include, for example, an environment element ID 901, an environment element type 902, a flag 903 for the presence and absence of information, spatial information 904, following-road information 905, and other information 906. The environment element ID 901 and the environment element type 902 correspond to an ID 201 and a type 202, respectively, of the obstacle information in Fig. 3, respectively, or an ID 211 and a type 212, respectively, of the road information. The flag 903 for the presence and absence of information is information indicating whether or not the spatial information 904, the following-road information 905, or other information 906 is included within the message.

For example, in a case where a flag that corresponds to the spatial information 904 is not raised, a portion that is the spatial information 904 is omitted. The spatial information 904 is a data group relating to the spatial information on the environment element, and for example, includes position coordinates (absolute coordinates, such as latitude and longitude, or relative coordinates with respect to the vehicle 2) with which the environment element is associated, a bearing, position coordinates of a prospective traveling course, and the like. The following-road information 905 is a data group relating to the following-road information on the environment element, and for example, include a following-road distance or a distance range from the vehicle 2, which relates to a position associated with the environment element, a (following-road) speed, and a lane ID, and the like. Other information 906 is a data group relating to information that does not have a relationship with a position, in the environment element. For example, if the environment element is a vehicle, a type of the vehicle, a width of the vehicle, an internal state (a blinker operating state, or the like) of the vehicle correspond to other information 906.

It is noted that in the present embodiment, information on each environment element may be transmitted with an individual message, but that a plurality of environment elements may be combined within one message for transmission.

Furthermore, information relating to a recommended-for-traveling lane may be transmitted in S808 in the same manner as the information on the environment element. The recommended-for-traveling lane, as described above, is managed in a form that is expressed with a pair of a vehicle ID and a range of distance from a starting point of the road section.

However, in S808, in the same manner as with other environment elements, the following-road distance that is expressed as the following-road information which is transmitted is not the following-road distance on a per-road-section basis, and is assumed to be converted into what results from integrating following-road distances on a per-road-section basis along a road. By providing the information relating to the recommended-for-traveling lane, it can be easily known whether or not the lane changing is necessary or in which section the lane changing is possible when the drive assistance device 70 calculates the drive behavior plan.

For example, pieces of information relating to the recommended-for-traveling lane in an example in Fig. 8 are integrated along a path, and thus are expressed as (6202:0 m to 35 m), (6203:35 m to 90 m), (6204:90 m to 110 m), and (6205:110 m to X m), but because a recommended-for-traveling range of the lane 6202 ends 35 m ahead, it is understood that there is the necessity to move to the lane 6203. It is noted that referring to the connection information of the lane information that is transmitted as the following-road information, it is understood that the lane 6202 and the lane 6203 are in the same road section and that there is a need to change the lane at a point that is 35 m ahead.

On the other hand, the necessity to move from the lane 6203 to the lane 6204 is the same as well, but referring to the connection information of the lane information, it is understood that both are connected along the following-road, there is no necessity to change the lane. It is noted that, for example, as illustrated in Fig. 9, in a case where there are a plurality of lanes as lanes recommend for traveling, an overlapping section occurs in a range recommended for traveling, in different lanes, such as (6033:0 m to X1 m), (6032:0 m to X2 m), and so forth, but referring to this overlapping section, it is possible that a section in which the lane changing is possible is known.

In this manner, by providing the information relating to the recommended-for-traveling lane, the drive assistance device 70 can easily know whether or the lane changing is necessary, or the restriction condition for the drive behavior plan, such as the section in which the lane changing is possible, and when compared with the case where the calculation only from the lane information is performed, it is possible that processing load is reduced.

Returning to the processing flow 800 in Fig. 12 takes place. If the number of times that the message is transmitted is equal to or greater than a predetermined number of times N1 (Yes in S809), the present processing flow is ended. If the number of times that the message is transmitted is smaller than the predetermined number of times N1 (No in S809), returning to S803 takes place and the same processing is performed.

N1 is set when an environment of a transmission destination of the surrounding environment information is limited to the number of times that the message is received, due to a restriction on a memory, processing performance, or the like. In the present processing, because a mechanism in which the transmission to a target is performed in order of decreasing the degree of the association with traveling is employed, even in a case where a restriction is imposed on an amount of information that is transmissible, it is possible that the information that exerts an influence on the vehicle 2's traveling is preferentially provided. It is noted that in the present embodiment, the number of times that the message is transmitted to all environment elements, but for each type of environment element, the number of times that the message is transmitted may be individually calculated or the maximum number of times of transmission may be defined.

As described above, according to the present embodiment, the surrounding environment recognition device 10 of the vehicle 2 determines the relationship between the traveling path information for the vehicle 2 or the traveling plan information, such as the control plan information, and each environment element, and according to the relationship, determines the environment element that is set to be the information provision target.

Because after considering a prospective behavior of the vehicle 2, it is determined whether or not the provision to each environment element is necessary, when compared with the case where, as with the relative distance or the like, the determination is performed based on a state at the point in time of the relative distance, information necessary for traveling control of vehicle can be extracted with higher precision. That is, it is possible that the information on the environment element, which is unnecessary for control, is excluded with high precision, and it is possible that arithmetic operation processing load or an amount of use of memory pertaining to the control is reduced.

Furthermore, according to the present embodiment, the relationship of the environment element is quantified as the degree of association with traveling according to the relative distance (road following) from the vehicle 2 to a point associated with the environment element, or the time taken for the vehicle 2 to arrive at the point, and the degree of priority for the transmission of the information is determined according to the degree of association with traveling. For this reason, even in a case where a restriction is imposed on the number of environment elements on which pieces of information is receivable at the control side, it is possible that the information on the environment element that exerts a great influence on the vehicle 2's traveling and that is close to the vehicle 2 is preferentially provided. For example, because many other vehicles are present in a path for the vehicle 2 at the time of the traffic congestion, when all pieces of information on other vehicles are received, the arithmetic operation processing load or the amount of use of memory on the control side increases.

On the other hand, because other vehicles in the vicinity are in the way of the vehicles 2's at the time of the traffic congestion, other vehicles in the far distance on the path exerts a small influence on the vehicle 2's traveling. In this manner, with a mechanism in which the information on the environment element that is closer along the road is preferentially transmitted and in which the transmission is not performed when the predetermined number of times of transmission is exceeded, even in a case where the road is crowded such as at the time of the traffic congestion, it is possible that a larger amount of information relating to the environment element than is necessary is suppressed from being provided.

Furthermore, according to the present embodiment, the information on the environment element, of which the degree of association with traveling is lower than a first threshold is excluded from a provision target and in a where the degree of association with traveling is lower than a second threshold (<the first threshold), the information from which the spatial information is omitted is provided. As described above, on the control side, the spatial information on the environment element is necessary for the vicinity (approximately 5 seconds to 10 seconds) where the traveling course needs to be calculated, but is unnecessary for a remote road other than the vicinity. For this reason, when it comes to a remote distance that is greater than a predetermined distance range or an arrival range within a predetermined time, it is possible that by providing the information from which the spatial information is omitted, an amount of data to be provided is reduced while satisfying a requirement on the control side.

It is noted that the embodiment described above is an example and that the present invention is not limited to this. That is, various applications are possible and all embodiments that result from the various applications fall within the scope of the present invention.

For example, the embodiment described above assumes that the traveling path is uniquely determined, but a plurality of traveling paths may be present. For example, in a case where a person drives (in a case where an automatic drive mode is not entered), for example, although a recommended pant is set by a navigation device, the person does not drive necessarily along the path that is set.

Accordingly, a plurality of road candidates that can be selected are generated without specifying one path, and thus information that results from assigning a probability of being selected to each road candidate may be set to be the traveling path information. This probability of being selected is calculated, for example, based on a traveling history of the person or statistical information on an amount of traffic on the road. Then, it is possible that the mechanism as described above is applied by taking into consideration the probability as the weight of the degree of association with traveling.

For example, in the embodiment described above, each processing operation by the surrounding environment recognition device 10 is realized by executing a predetermined operation program using a processor or a RAM, but it is also possibly realized in independent hardware whenever necessary. Furthermore, in the embodiment described above, the surrounding environment recognition device, the wireless communication unit, the user's vehicle positioning device, the external sensor group, the vehicle sensor group, the path generation device, the drive assistance device, the vehicle-mounted HMI device, and the actuator group are described individual devices, but are possible realized by combining arbitrary two or more of these whenever necessary.

In a case where each processing operation described above is realized by the processor executing a predetermined operation program, the operation program that realizes each processing operation, a table, and information such a file can be stored in a storage device, such as a nonvolatile semiconductor memory, a hard disk drive, and a Solid State Drive (SSD), or in a computer-readable non-temporary data storage media, such as an IC card, an SD card, and a DVD.

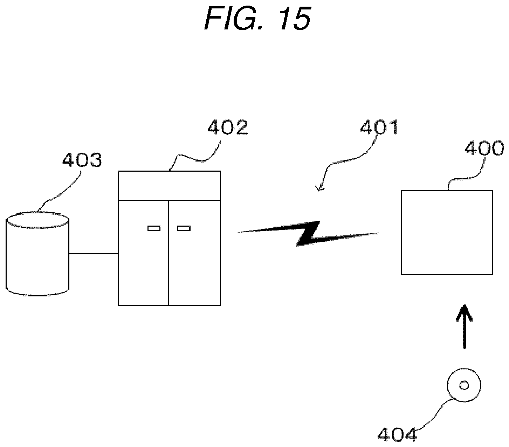

Fig. 15 is a diagram illustrating a situation where the operation program, the table, and the information such as the file, which are described above, are provided in an on-board device through a recording medium or a data signal. The on-board device 400 is mounted in a vehicle, and has a processor that is capable of executing various programs. The on-board device 400 is provided with pieces of information, such as an operation program for realizing various processing operations described above, through a CD-ROM 404. The operation program is executed by the processor of the on-board device 400, and thus the on-board device 400 can be caused to operate as the surrounding environment recognition device 10 that has a configuration which is illustrated in Fig. 1. Furthermore, the on-board device 400 has a function of making a connection to a communication line 401. A computer 402 is a server computer that provides information such as the operation program described above, and stores the information in a recording medium such as a hard disk 403. The communication line 401 is a communication line such as the Internet or a personal computer communication, or a dedicated communication line. The computer 402 reads the information such as the operation program, using the hard disk 403, and transmits the information that is read, to the on-board device 400 through the communication line 401. That is, the program is transmitted, as a data signal, on a carrier wave, through the communication line 401. In this manner, a program that causes the on-board device 400 to operate as the surrounding environment recognition device 10 can be supplied as a computer-readable computer program product in various forms such as a recording medium or a data signal (a carrier wave).

Furthermore, in the drawings, a control line and an information line, which are considered as being necessary for describing the embodiment are illustrated, and all control lines and information lines that are included in an actual product to which the present invention is applied are not necessarily illustrated. It may be considered that in practice, almost all configurations are connected to each other.

This application is based upon and claims the benefit of priority of the prior Japanese Patent Application No. 2015-139317, filed on July 13, 2015, the entire contents of which are incorporated herein by reference.

### Reference Signs List

1 SURROUNDING ENVIRONMENT RECOGNITION SYSTEM
2 VEHICLE
10 SURROUNDING ENVIRONMENT RECOGNITION DEVICE
20 WIRELESS COMMUNICATION UNIT
30 USER'S VEHICLE POSITIONING DEVICE
40 EXTERNAL SENSOR GROUP
50 VEHICLE SENSOR GROUP
60 PATH GENERATION DEVICE
70 DRIVE ASSISTANCE DEVICE
80 VEHICLE-MOUNTED HMI DEVICE
90 ACTUATOR GROUP
100 PROCESSING UNIT
101 ASSOCIATED INFORMATION ACQUISITION UNIT
102 SURROUNDING ENVIRONMENT ELEMENT INTEGRATION PROCESSING UNIT
103 TRAVELING-ASSOCIATED AREA DETERMINATION UNIT
104 RELATIONSHIP-OF-ENVIRONMENT-ELEMENT-TO-TRAVELING CALCULATION UNIT
105 DEGREE-OF-ASSOCIATION-OF-ENVIRONMENT-ELEMENT-WITH-TRAVELIN G CALCULATION UNIT
106 SURROUNDING ENVIRONMENT INFORMATION PROVISION UNIT
120 STORAGE UNIT
121 SURROUNDING ENVIRONMENT ELEMENT INFORMATION DATA GROUP
122 USER'S INFORMATION DATA GROUP
123 TRAVELING-ASSOCIATED AREA DATA GROUP
124 RELATIONSHIP-OF-ENVIRONMENT-ELEMENT-TO-TRAVELING DATA GROUP
130 COMMUNICATION UNIT

## Claims

1. A surrounding environment recognition device that is mounted in a vehicle, comprising:
a traveling path information acquisition unit that acquires traveling path information indicating a traveling path for the vehicle;
a surrounding environment element information acquisition unit that acquires surrounding environment element information that includes spatial positional-relationship information indicating a spatial positional relationship to the vehicle, which relates to an environment element in the vicinity of the vehicle;
a relationship-of-environment-element-to-traveling calculation unit that calculates a relationship of the environment element to traveling of the vehicle, based on the traveling path information and the spatial positional-relationship information;
a surrounding environment information provision unit that provides information relating to the environment element, based on the relationship to the traveling of the vehicle, which is calculated by the relationship-of-environment-element-to-traveling calculation unit.

2. The surrounding environment recognition device according to claim 1,
wherein the relationship to the traveling of the vehicle, which is calculated by the relationship-of-environment-element-to-traveling calculation unit includes information pertaining to a point, a section or an area on the traveling path to which the environment element relates, and
wherein the surrounding environment information provision unit does not provide the information relating to the environment element in a case where the point, the section or the area on the traveling path to which the environment element relates is not present.

3. The surrounding environment recognition device according to claim 2,
wherein the relationship to the traveling of the vehicle further includes following-road positional-relationship information, which pertains to a relationship to a position on a following road between the vehicle, and the point, the section, or the area on the traveling path to which the environment element relates, and
wherein the information relating to the environment element, which is provided by the surrounding environment information provision unit, includes the following-road positional-relationship information.

4. The surrounding environment recognition device according to claim 2 or 3, further comprising:
a prospective-position-of-environment-element estimation unit that estimates a prospective position of the environment element, using the surrounding environment element information,
wherein the relationship-of-environment-element-to-traveling calculation unit calculates a point, a section, or an area where the prospective position of the environment element, which is estimated by the prospective-position-of-environment-element estimation unit, overlaps the traveling path, and
wherein the point, the section, or the area on the traveling path, to which the environment element relates is the point, the section, or the area where the prospective position of the environment element overlaps the traveling path, respectively.

5. The surrounding environment recognition device according to any one of claims 1 to 4,
wherein the relationship to the traveling of the vehicle that is calculated by the relationship-of-environment-element-to-traveling calculation unit includes information pertaining to the degree of association with the traveling path, which results from digitalizing the degree of a relationship between the environment element and the traveling of the vehicle, and
wherein the surrounding environment information provision unit determines whether or not the information relating to the environment element is provided according to the degree of the association with the traveling path.

6. The surrounding environment recognition device according to claim 5,
wherein the surrounding environment information provision unit determines that it is unnecessary to provide the information relating to the environment element in a case where the degree of the association with the traveling path is lower than a first threshold.

7. The surrounding environment recognition device according to claim 3,
wherein the relationship to the traveling of the vehicle, which is calculated by the relationship-of-environment-element-to-traveling calculation unit, includes information pertaining to the degree of the association with the traveling path, which results from digitalizing the degree of the relationship between the environment element and the traveling of the vehicle, and
wherein the surrounding environment information provision unit provides the following-road positional-relationship information and does not provide the spatial positional-relationship information, in a case where the degree of the association with the traveling path is equal to or higher than the first threshold and is smaller than a second threshold.

8. The surrounding environment recognition device according to any one of claims 5 to 7,
wherein the relationship-of-environment-element-to-traveling calculation unit calculates the degree of the association with the traveling path, based on a distance on the following road, to the point, the section, or the area on the traveling path, to which the environment element relates, on the time taken for the vehicle to arrive at the point, the section, or the area on the traveling path, to which the environment element relates, or on a combination of these.

9. The surrounding environment recognition device according to claim 8,
wherein the relationship-of-environment-element-to-traveling calculation unit performs calculation in such a manner that the shorter the distance on the following road, to the point, the section, or the area on the traveling path, to which the environment element relates, or the shorter the time taken for the vehicle to arrive at the point, the section, or the area on the traveling path, to which the environment element relates, the greater a value of the degree of the association with the traveling path.

10. The surrounding environment recognition device according to any one of claims 2 to 4, further comprising;
a traveling-associated area calculation unit that calculates an area associated with the traveling of the vehicle, based on the traveling path information,
wherein the relationship-of-environment-element-to-traveling calculation unit calculates information pertaining to the point, the section, or the area on the traveling path, to which the environment element relates, based on the area associated with the traveling of the vehicles.

11. The surrounding environment recognition device according to claim 10, further comprising:
a control plan information acquisition unit that acquires control plan information which includes a traveling course information that is planned by a traveling control unit that is mounted in the vehicle,
wherein the relationship-of-environment-element-to-traveling calculation unit calculates the area associated with the traveling of the vehicle, based on the control plan information that is acquired by the control plan information acquisition unit.

12. The surrounding environment recognition device according to claim 10 or 11,
wherein the surrounding environment element information includes information on a lane on the traveling path for the vehicle,
wherein the surrounding environment recognition device further includes a lane-recommended-for-traveling calculation unit that calculates information on a recommended-for-traveling lane, which indicates a range of a lane that is recommended in order for the vehicle to travel along the traveling path for the vehicle, based on information on a lane on the traveling path for the vehicle, and
wherein the relationship-of-environment-element-to-traveling calculation unit calculates the area associated with the traveling of the vehicle, based on the information on the recommended-for-traveling lane that is calculated by the lane-recommended-for-traveling calculation unit.

13. The surrounding environment element recognition according to claim 12,
wherein the information relating to the environment element that is provided by the surrounding environment information provision unit includes the information on the recommended-for-traveling lane.

14. A computer program product that causes an on-board device, which is mounted in a vehicle, to operate as a surrounding environment recognition device comprising:
a traveling path information acquisition unit that acquires traveling path information indicating a traveling path for the vehicle;
a surrounding environment element information acquisition unit that acquires surrounding environment element information that includes spatial positional-relationship information indicating a spatial positional relationship to the vehicle, which relates to an environment element in the vicinity of the vehicle;
a relationship-of-environment-element-to-traveling calculation unit that calculates a relationship of the environment element to traveling of the vehicle, based on the traveling path information and the spatial positional-relationship information;
a surrounding environment information provision unit that provides information relating to the environment element, based on the relationship to the traveling of the vehicle, which is calculated by the relationship-of-environment-element-to-traveling calculation unit.
